# EUROPEAN PATENT APPLICATION

(11) **EP 1 868 084 A1**
(43) Date of publication of application: **19.12.2007**
(21) Application number: 06270059.6
(22) Date of filing: 16.06.2006
(51) Int. Cl.: G06F 9/44

(54) **Assigning Hotkeys**

(71) Applicant: Microsoft Corporation, Redmond WA 98052 (US)
(72) Inventor: Van Woerkom Norbert, Microsoft, European Product Development Centre (EPDC), Dublin,18 (IE); Ahs, David, Microsoft, European Product Development Centre (EPDC), Dublin, 18 (IE); McKeown, Gavin, Microsoft, European Product Development Centre (EPDC), Dublin, 18 (IE); Harrington, Laura, Microsoft, European Product Development Centre (EPDC), Dublin, 18 (IE); Ryan, Patrick, Microsoft, European Product Development Centre (EPDC), Dublin, 18 (IE); Farrell, Terry, Microsoft, European Product Development Centre (EPDC), Dublin,18 (IE)
(74) Representative: Free, Rachel Alder

(57) **Abstract**

A hotkey is typically indicated by marking a character in a text label associated with an action to be triggered via a user interface. It is difficult to assign hotkeys such that they are not duplicated between labels for different actions. Where the user interface is to be translated into different languages such as French and German, hotkeys need to be reassigned in order that characters within translated text labels are used. Methods for automatically assigning hotkeys as well as for detecting and resolving hotkey clashes are described. Normalised resource grouping information is used and the resources are ranked on the basis of a cost of change factor associated with each resource. For a given state (set of resources and their hotkeys) a resource is selected on the basis of its rank. A cost of use factor is determined for that resource and an attempt made to improve this cost of use factor by making hotkey changes in single resources. The method is repeated in order to obtain a new state (set of resources and their hotkeys) which has reduced hotkey clashes. To further improve, a second method is optionally followed which involves making hotkey changes in two resources.

## Description

### COPYRIGHT NOTICE

A portion of the disclosure of this patent contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### TECHNICAL FIELD

This description relates generally to hotkeys and more specifically to methods and apparatus for assigning hotkeys.

### BACKGROUND

Computer programs which provide a user interface, such as a graphical user interface (GUI) with menus, dialog boxes, task bars and the like, are often designed to be controlled using input devices such as a keyboard and a pointing device, such as a mouse, electronic ink pen, touch pad or the like. However, it is often preferred to provide the additional ability to access all functionality through the user interface via the keyboard alone. For example, this enables users who are unable to use a pointing device to operate the keyboard in order to use the software. Also, speed of use of the GUI is often facilitated by enabling keystrokes to be used, especially for repetitive tasks. Typically, this is achieved through the use of hotkeys. A 'hotkey' is a key (or sequence of keys) on the keyboard which is associated with a particular action or function of a computer program. Pressing a hotkey on the keyboard will trigger the associated action or function when the software is in a state arranged to expect the hotkey press. Where a hotkey is available this is typically indicated in a graphical user interface display by underlining or other marks. For example a menu command "FILE OPEN" with the character O underlined can indicate that the character O is a hotkey which when pressed triggers the action for opening a file. That is, a hotkey is usually (but not always) a character taken from a string associated with the action or function to be triggered. As mentioned above, a 'hotkey' can also be a sequence of keys such as FF or FG and can in some cases be an accelerator or shortcut. For example, "Ctrl + O" and "Ctrl + P" are accelerators, being sequences of keys which when pressed, directly trigger a certain action in an application.

The problem of how best to assign hotkeys is significant especially for complex user interfaces. Many competing factors need to be taken into account. For example, it is desired to ensure consistency of hotkey assignment within a software application and within groups of related software applications. Also, hotkeys should be unique in that one hotkey should be associated with any one action or function. This is difficult to achieve for complex user interfaces and/or where the number of available characters is low. In addition, during localisation of software, whereby strings are translated from say American English to French, many problems arise with regard to hotkeys as discussed in more detail below.

As mentioned above it is difficult to ensure that hotkeys are unique. Also, it can be difficult to maintain this uniqueness if it is achieved. For example, strings (including their hotkeys) as displayed on a GUI dialog might be constructed or loaded only at run time. In that situation, when adding another label (string labelling an action or function) to the dialog it is not straightforward to determine which hotkeys are already in use.

A complicating factor is that often strings are shared between dialogs\menus (in general referred to as groupings), in order to improve the consistency throughout the application. This means the hotkey character used in that label is also consistent throughout the application, and can not be used by any of the other labels in all the other dialogs or menus the string is used in.

Furthermore, during the localization of software in a different language, the hotkey-characters most likely will need to be changed. For example, an application with menus often has the word "File" as menu header, with a hotkey-character of 'f'. When this is translated to Spanish, the translation is 'Archivo' which does not contain that character, and therefore the hotkey needs to be reassigned to one of the available characters.

During the localization of the software, it might be even less obvious to the localizer which characters have already been assigned hotkeys. Often, the localizable text (referred to as resources) has been extracted from the actual source code and is presented to the localizer in one large database (referred to as localization database), making it impossible to even know which strings are appearing together at runtime, and should therefore not be assigned the same hotkeys.

As a result, localized software often contains many clashing (or duplicated) hotkeys in its dialogs or menus. Localizers and testers often spend many hours detecting and manually fixing these clashes at great monetary costs.

The frequency of occurring clashes and the difficulty in finding solutions for these increases exponentially when the size of the application increases.

In the case of software application suites, where several applications share many resources, the complexity increases even more. From a localization point of view, any solution that is introduced needs to be applicable to any number of languages.

An object of the invention is to provide a method and system for automatically assigning hotkeys and/or detecting and resolving hotkey clashes which addresses or at least mitigates one or more of the problems mentioned herein.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A hotkey is typically indicated by marking a character in a text label associated with an action to be triggered via a user interface. It is difficult to assign hotkeys such that they are not duplicated between labels for different actions. Where the user interface is to be translated into different languages such as French and German, hotkeys need to be reassigned in order that characters within translated text labels are used. Methods for automatically assigning hotkeys as well as for detecting and resolving hotkey clashes are described. Normalised resource grouping information is used and the resources are ranked on the basis of a cost of change factor associated with each resource. For a given state (set of resources and their hotkeys) a resource is selected on the basis of its rank. A cost of use factor is determined for that resource and an attempt made to improve this cost of use factor by making hotkey changes in single resources. The method is repeated in order to obtain a new state (set of resources and their hotkeys) which has reduced cost of use factors. To further improve, a second method is optionally followed which involves making hotkey changes in two resources.

In another example, a mapping between keyboard characters in a source and target language is used.

The present example provides a method of assigning hotkeys within a resource grouping the method comprising:
- receiving normalised grouping information for the resource grouping;
- ranking the resources in the grouping on the basis of a cost of change factor associated with each resource, the cost of change factor being related to at least the normalised grouping information;
- accessing state information comprising a hotkey value for each resource group;
- selecting a resource on the basis of its rank;
- determining a cost of use factor for the hotkey of the selected resource;
- attempting to improve the determined cost of use factor by making a change to the hotkey in the selected resource and if the attempt is successful effecting the hotkey change such that the state information is changed; if the change is not successful, selecting the next resource from the ranked resources until all resources have been processed.

This provides the advantage that an improved set of hotkeys is obtained for a given resource grouping without the need for manual intervention and in a simple and effective manner. By using normalised grouping information and by ranking the resources we reduce the amount of time needed to find an improved set of hotkeys. Use of a cost of use factor is effective for assessing whether a hotkey change is an improvement.

A corresponding apparatus is provided for assigning hotkeys within a resource grouping the apparatus comprising:
- an input arranged to receive normalised grouping information for the resource grouping;
- ranking means arranged to rank the resources in the grouping on the basis of a cost of change factor associated with each resource, the cost of change factor being related to at least the normalised grouping information;
- an input arranged to access state information comprising a hotkey value for each resource group;
- a selector arranged to select a resource on the basis of its rank;
- a processor arranged to determine a cost of use factor for the hotkey of the selected resource;
- the processor being arranged to attempt to improve the determined cost of use factor by making a change to the hotkey in the selected resource and if the attempt is successful effecting the hotkey change such that the state information is changed; if the change is not successful, selecting the next resource from the ranked resources until all resources have been processed.

Preferably the normalised grouping information comprises an indication as to whether each resource is a member of the group as a whole or to one of a plurality of subgroups. This enables computation time to be reduced and the search space for possible hotkey combinations to be reduced. Also, by using the normalised information we are able to give the most frequently used resources the highest priority in assigning hotkeys. This is beneficial as often there are more hotkeys required than there are characters available in the strings or in the language.

Preferably resources within subgroups have a lower cost of change factor than resources within groups.

Preferably the method further comprises receiving information about resources comprising any one or more of: resources which are used in other resource groupings, resources which are legacy-resources, resources which are locked, resources which must assume the same hotkey value as a master-resource, and resources which are master-resources.

For example, the method further comprises using any one or more of the items of information about resources to influence a cost of change factor for each resource. Using a cost of change factor in this way provides a single value which enables a quick and accurate assessment of the likely implications of changing a hotkey in a given resource.

Preferably the step of accessing the state information comprises assigning a hotkey for one or more resources which have no hotkey already, the assignment being made by selecting a character from the resource or from a set of available characters. This is advantageous for resources where hotkeys have not been assigned or in cases where no hotkeys at all have been assigned. In that situation, hotkeys can initially be selected arbitrarily and then improved using the methods described herein.

Preferably the cost of use factor is related to one or more of: duplicates with hotkeys from resources in higher level groups of the normalised grouping; duplicates with hotkeys from foreign controls; duplicates with hotkeys of any resources in the grouping; whether the hotkey is preferred or allowed; presence of hotkey duplicates in other resource groupings of which the resource concerned is a member. This enables the cost of use factor to effectively represent the degree of need to change a given hotkey in a resource.

Preferably the attempt to improve the determined cost of use factor comprises changing the hotkey to another character in the selected resource. This is a simple and effective method in cases where hotkeys are to be characters contained in resources.

Advantageously the method further comprises, after said step in which all the resources are processed, carrying out an attempt to improve the state by making a change to a hotkey in two or more resources. This has the effect of "nudging" the hotkey state into a different configuration in which a better hotkey combination might be found. This is advantageous where the single resource change method does not provide ideal hotkey combination results.

For example, changes to the hotkeys in two resources are made by:
- selecting a first resource that has a hotkey clash with at least one other resource
- calculating possible hotkey values the first resource can assume
- selecting a second resource that currently uses a hotkey value that the first resource could use
- changing the hotkey value of the second resource to another hotkey value; and
- setting the hotkey value of the first resource to the hotkey value the second resource had before the change.

By making a double resource change improved hotkey configurations are often found, especially in situations where the single resource-change algorithm does not yield ideal results.

In examples where an apparatus is provided for resolving hotkey clashes, examples of preferred features are now given:

Preferably the apparatus comprises an input arranged to receive information about resources comprising any one or more of: resources which are used in other resource groupings, resources which are legacy-resources, resources which are locked, resources which must assume the same hotkey value as a master-resource, and resources which are master-resources.

Preferably the processor is arranged to use any one or more of the items of information about resources to influence a cost of change factor for each resource.

Advantageously, the input arranged to access the state information comprises a processor arranged to assign a hotkey for one or more resources which have no hotkey already, the assignment being made by selecting a character from the resource or from a set of available characters.

In some embodiments the processor is arranged such that the attempt to improve the determined cost of use factor comprises changing the hotkey to another character in the selected resource.

Preferably the processor is arranged such that after all the resources are processed, an attempt is made to improve the state by making a change to a hotkey two or more resources.

For example, the processor is arranged to make changes to hotkeys in two resources by:
- selecting a first resource that has a hotkey clash with at least one other resource
- calculating possible hotkey values the first resource can assume
- selecting a second resource that currently uses a hotkey value that the first resource could use
- changing the hotkey value of the second resource to another hotkey value; and
- setting the hotkey value of the first resource to the hotkey value the second resource had before the change.

Another example provides a method of assigning a hotkey to a resource comprising:
- accessing a mapping between a source language keyboard character set and a target language keyboard character set;
- identifying one or more hotkey characters of a source language resource and determining one or more corresponding mapped characters using the accessed mapping;
- accessing a translation of the source language resource that translation being in a target language;
- adding the one or more mapped characters to the target language resource.

This provides the advantage that a simple and effective method of assigning a hotkey is achieved without the need for testing or complex logic.

The invention also encompasses a computer program comprising computer program code means adapted to perform all the steps of any of the methods described above when said program is run on a computer. The computer program can be embodied on a computer readable medium.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions, (and therefore the software essentially defines the functions of the register, and can therefore be termed a register, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a high level example localisation process;
FIG. 2 is a schematic diagram of a hotkey fixer showing inputs and outputs;
FIG. 3 is a flow diagram of a single resource change algorithm;
FIG. 4 is a flow diagram of a double resource change algorithm;
FIG. 5 is a flow diagram of another method of assigning hotkeys.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

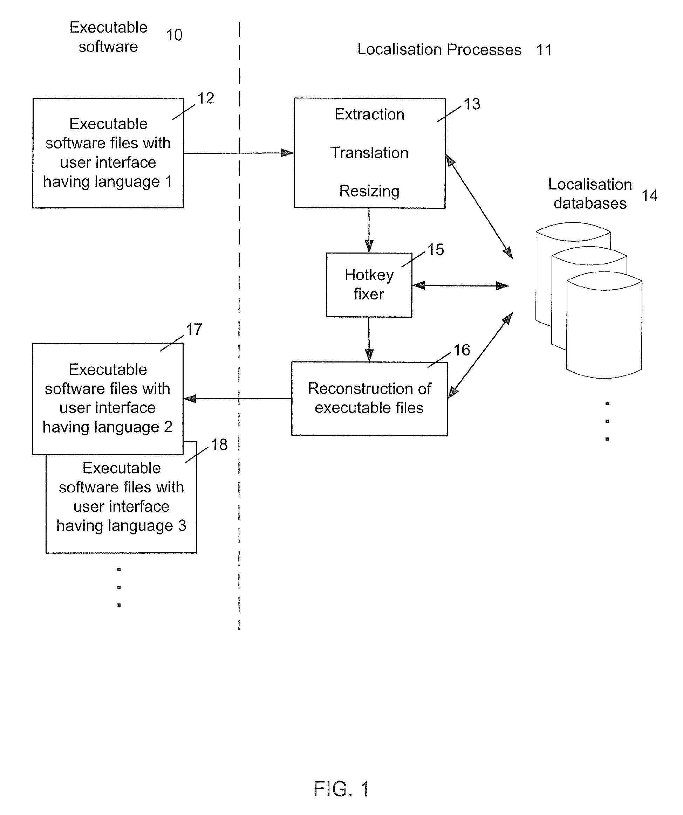

FIG. 1 is a schematic diagram of a high level example localization process. FIG. 1 is intended to illustrate an example of a hotkey assignment apparatus as part of a localisation process. However, the hotkey assignment methods and apparatus described herein can also be used for assigning hotkeys in a source language and are in no way limited to a localisation process. Executable software files 12 which provide a user interface in language 1 (e.g. American English) are used to form equivalent software files 17, 18 which provide a user interface in other languages (e.g. French, Arabic, Japanese, etc). This executable software 10 is represented on the left side of FIG. 1. The executable software files 12, 17, 18 are in any suitable format such as .exe, .dll, .htm, .xml and other file formats.

Localization processes are represented on the right hand side of FIG. 1. Items that need to be translated from American English to one or more target languages are extracted from the executable software files using software for extraction, translation and resizing 13. The extracted items are referred to herein as "resources" and comprise localisable strings, menu commands, labels on dialogs, images, icons and any other suitable user interface items which require localisation. A localisation database 14 is provided for each target language or alternatively these databases can be integral provided that the data can be accessed for each target language separately.

The extracted resources are translated into the various target languages and stored in the respective localisation databases 14. The translation process can be achieved in any suitable manner, for example, using machine translation, software guided manual translation or pure manual translation. Any menus, dialogs or other user interface items that need to be resized or rearranged as a result of the translation process are adjusted in any suitable manner. For example, the target language may read from right to left such that dialogs for American English may need to be rearranged.

An automated hotkey fixer 1 5 is provided to assign hotkeys where required in the various target languages, as well as to detect and resolve hotkey duplication events.

Various other processes for error removal or improving the quality of the localisation process can be used although these are not illustrated in FIG. 1 for clarity.

A process for reconstructing 16 executable files in the various target languages takes results from the localisation processes 11 and forms the localised executable software files 17, 18.

Thus FIG. 1 illustrates an example of how the hotkey fixer 1 5 of the present application can be arranged to interwork with other localisation processes. In this example, localisation is carried out after compilation of source code into executable files. However, this is not essential. It is also possible to perform localisation in a similar manner using source code files.

The hotkey fixer 1 5 provides functionality to automatically assign hotkeys where required and to detect and resolve hotkey clashes. As mentioned above there are various requirements that hotkeys need to meet as far as possible and these are described below. However, it is not essential to use these particular criteria. Any suitable combination of these criteria or other criteria relating to hotkey configurations can be used.

In addition to those hotkey requirements we seek where possible to change as little as possible in hotkey configurations. This not only helps with consistency with previous versions of an application but leads to simple and effective solutions.

### Consistency

A hotkey for a particular label should be consistent as far as possible between different software applications in the same suite. For example, a hotkey for "File Open" should be consistent between a word processing application, a technical drawings application and a spreadsheet application. A hotkey for a particular label should also be consistent throughout an application or with other software applications such as an associated operating system. A hotkey should also preferably be consistent between versions of an application such that the hotkey for "File Open" should remain the same between version 1 and version 2 etc for the same application.

### Presence in the label

A hotkey should be a character present in the associated label where possible. Where this is not possible 'dummy' hotkeys can be used as is often the case for software applications localised in Chinese or Japanese. For example, dummy hotkeys are often added as a suffix for Japanese user interfaces.

### Presence on the keyboard

A hotkey should be accessible on the keyboard either as a single key or together with other keys (such as the Shift key) pressed simultaneously. For e.g. the hotkey 'A' is accessible on an American English keyboard by pressing the key 'A', whereas the hotkey 'Ö' is not directly accessible on an American English keyboard.

### Brevity

When a hotkey can be represented by a sequence of characters, the shorter the sequence of characters is for the hotkey, the better. E.g. the sequence 'FF' is preferred over the sequence 'FFF'.

### Clarity

Where hotkeys are indicated using underlining or other markers they should not be obscured by the markers. Thus in the case that underlining is used, p and q are not preferred for hotkeys.

### Uniqueness

Preferably all hotkeys should be unique within a single application or suite of applications. This is not possible where the number of available characters is limited and/or the number of labels requiring hotkeys is high. Thus it is preferred that for all groupings that contain label x the hotkey for label x is unique. A "grouping" is a term used herein to refer to a part of a user interface such as a menu display or dialog display. A grouping may comprise one or more subgroupings as described in more detail below. In the case that sequences of characters are used for hotkeys the sequence should uniquely identify an associated action where possible. For example 'F' and 'FF' are duplicate whereas 'FF' and 'FG' are not.

The number of available hotkeys and the number of labels requiring hotkeys are both substantial especially for complex user interfaces and suites of software applications. This means that the number of possible combinations of labels and hotkeys is vast and it is not practical in terms of time and cost to assess all those possible combinations in order to select an optimal combination. The problem is addressed by intelligently cutting down the search space to reduce the number of combinations that need to be considered. A normalisation process is used to achieve this optionally together with heuristics to detect and resolve hotkey duplication.

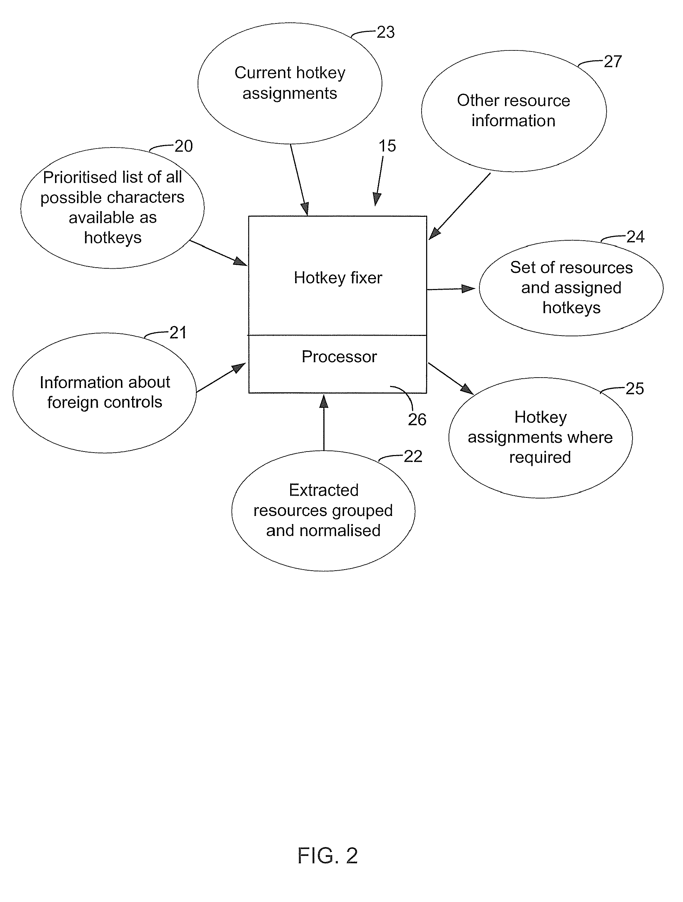

FIG. 2 is schematic diagram of a hotkey fixer 15 showing the various inputs. In an example a target language into which a software application is to be localised is French. A source language in which a user interface of the software is provided is, for example, American English. The hotkey fixer 1 5 takes as input information 20 about all possible characters which can be used as hotkeys in the target language. This information is provided in any suitable form such as a list, flat file, table or other form.

The information optionally comprises preference information such that g and q are not preferred for example when underlining is being used. Similarly, O and 0 might not be preferred because users confuse these characters. The preference information is provided in any suitable way, for example by creating a list of not preferred characters or creating a ranked list of characters ranked in order of preference.

In one example, language specific XML files are used for detailing which characters are available and in which priority they should be used. An example is given below:

```
 <hotkeylist culture="en-ie">
       <hotkeys preference="preferred">
              <hotkey value="a"/>
              <hotkey value="b"/>
              <hotkey value="c"/>
              <hotkey value="d"/>
              <hotkey value="e"/>
              <hotkey value="f'/>
              <hotkey value="G" casesensitive="true"/>
              <hotkey value="h"/>
              (...)
       < / hotkeys>
       <hotkeys preference="allowed">
              <hotkey value="g" casesensitive="true"/>
              <hotkey value="j" casesensitive="true"/>
              <hotkey value="p" casesensitive="true"/>
              <hotkey value="q" casesensitive="true"/>
       </hotkeys>
 </hotkeylist>
```

Information about foreign controls 21 is optionally provided to the hotkey fixer 15. Foreign controls or resources are those which are not part of the software application itself. For example, these might be inherited from an operating system and often contain hotkeys themselves. Any solution that attempts to fix hotkey duplication should preferably be made aware of the existence of any foreign controls or resources. Otherwise, when resolving a hotkey clash another clash might be inadvertently introduced with another foreign control. An example of foreign controls on a dialog is a standard Win32 wizard which comprises "Previous" and "Next" buttons.

In one example, we store the foreign control information alongside the available characters for the specific language using XML. Because hotkeys used for foreign controls are typically language-specific, this implementation gives good flexibility. For example:

```
       (...)
       </hotkeys>
       <foreigncontrols>
              <foreigncontrol id="ID_PREVIOUS" char="p" />
              <foreingcontrol id="ID_NEXT" char="n" />
       </foreigncontrols>
 </hotkeylist>
```

Resources extracted 22 from the source application are also provided to the hotkey fixer 15. However, these resources are first grouped and normalised as explained below and translated to the target language. In addition, information about the currently assigned hotkeys 23 in the target language is provided to the hotkey fixer. At set of resources and their assigned hotkeys is referred to herein as a state. The outputs from the hotkey fixer comprise a state being a set of resources and their assigned hotkeys with hotkey duplications resolved, at least substantially (see 24 in FIG. 2). Optionally, the hotkey fixer also assigns hotkeys for any labels which did not previously have hotkeys assigned (see 25 in FIG. 2).

In addition, other information about resources (see 27 in FIG. 2) can optionally be provided. For example, this can be information about any master resources, resources that are influenced by a master resource, locked resources, resources which are legacy resources from earlier versions of the software, and resources which are used in other resource groupings.

The hotkey fixer itself comprises a processor 26 and for example is provided as a personal computer or any other suitable type of computer which has an operating system and is able to execute a computer program in order to carry out the methods described herein. The computer has communication means to enable it to receive the inputs described with reference to FIG. 2 and also has an output means of any suitable type such as display screen or printer output to make the outputs 24, 25 of FIG. 2.

### Grouping and normalising resources

A group refers to a set of labels or resources associated with a particular part of a user interface such as a menu or dialog. That group can have one or more subgroups each subgroup comprising labels or resources associated with a particular state of the part of the user interface. Each subgroup can have zero or more subgroups. It is also possible for a subgroup to comprise only those labels that are active at the same time (for example, using radio buttons). For a given user interface the grouping structure is thus independent of the target or source languages; rather it is dependent upon the user interface design. A hierarchy with multiple levels of subgroups is possible. We use the term 'parent resource group' in the following way. A parent resource group of a particular subgroup comprises all resources in any groups/subgroups from which the particular subgroup subtends until the root group is reached.

An example of subgroups taken from a user interface using radio buttons is now given. Consider three radio buttons called:
&Print
P&ublish
&Save
Here the & symbol is used to indicate that the subsequent character is a hotkey.

Each of these radio buttons may have additional options which are only enabled or available when that radio button is selected. For example:

| | |
|---|---|
| &Print may have | To &File |
| P&ublish may have | To &File, To &Web |
| &Save may have | To &File. |

In that situation whenever the &Print radio button is selected an associated subgroup comprises the other two radio buttons P&ublish, &Save, as well as To &File available as a result of selecting the first radio button. When the P&ublish radio button is selected the subgroup comprises the other two radio buttons as well as To &File and To &Web. Thus in this situation the hotkey F can be duplicated between the To &File labels.

In one example, a software application provides a user interface with a menu having four different states. One of these states might occur when a user has just started up the application; another might occur when the software application has been used for some time. However, any suitable states can be used. In our example, depending on the state of the application the menu comprises different strings or other resources. In this example, there are 20 resources that appear on the menu at some stage. Also, as the following table illustrates, the first 10 resources appear on the menu regardless of state. The second 10 resources appear depending on the state of the menu.

| | Label | state1 | state2 | state3 | state4 |
|---|---|---|---|---|---|
| id1 | New | □ | □ | □ | □ |
| id2 | Open | □ | □ | □ | □ |
| id3 | Close | □ | □ | □ | □ |
| id4 | Save | □ | □ | □ | □ |
| id 5 | Save As | □ | □ | □ | □ |
| id 6 | Save As Web Page | □ | □ | □ | □ |
| id 7 | File Search | □ | □ | □ | □ |
| id 8 | Permissions | □ | □ | □ | □ |
| id 9 | Versions | □ | □ | □ | □ |
| id 10 | Page Setup | □ | □ | □ | □ |
| id 11 | Print Preview | □ | | | |
| id 12 | Print | □ | □ | | |
| id 13 | Send To | | □ | | |
| id 14 | Properties | | □ | | |
| id 15 | Cut | | □ | | |
| id 16 | Copy | | | □ | |
| id 17 | Paste | | | □ | |
| id 18 | Replace | | | □ | |
| id 19 | Find | □ | | | □ |
| id 20 | Go To | | | | □ |

In this example the top level group comprises four subgroups one for each state. Thus, subgroup 1, corresponding to state1, comprises resources 1 to 12 and 19 from the above table. Subgroup 2 corresponding to state2 comprises resources 1 to 10 and 12 to 15. subgroup 3, corresponding to state3 comprises resources 1 to 10 and 16 to 18; and subgroup 4, corresponding to state 4 comprises resources 1 to 10 and 19 to 20.

This is an example of grouping information for a user interface menu. Similar grouping information is available for dialogs and other user interface items or parts. The grouping information is obtained in any suitable way, for example, it is provided as part of the user interface design process or is manually or automatically determined from analysis of the user interface itself.

The grouping information can be represented in any suitable manner, for example as a tree structure, a table, or using XML. In our menu example a possible XML representation of the grouping information is now given:

```
 <group id="menu1">
       <group id="statel ">
               <resource id="id1" />
               <resource id="id2" />
               <resource id="id3" />
               <resource id="id4" />
               <resource id="id5" />
               <resource id="id6" />
               <resource id="id7" />
               <resource id="id8" />
               <resource id="id9" />
               <resource id="id10" />
               <resource id="id11" />
               <resource id="id12" />
               <resource id="id19" />
       </group>
       <group id="state2">
               <resource id="id1" />
               <resource id="id2" />
               <resource id="id3" />
               <resource id="id4" />
               <resource id="id5" />
               <resource id="id6" />
               <resource id="id7" />
               <resource id="id8" />
               <resource id="id9" />
               <resource id="id10" />
               <resource id="id12" />
               <resource id="id13" />
               <resource id="id14" />
               <resource id="id15" />
       </group>
       <group id="state3">
               <resource id="id1" />
               <resource id="id2" />
               <resource id="id3" />
               <resource id="id4" />
               <resource id="id5" />
               <resource id="id6" />
               <resource id="id7" />
               <resource id="id8" />
               <resource id="id9" />
               <resource id="id10" />
               <resource id="id16" />
               <resource id="id1 7" />
               <resource id="id18" />
       </group>
       <group id="state4">
               <resource id="id1" />
               <resource id="id2" />
               <resource id="id3" />
               <resource id="id4" />
               <resource id="id5" />
               <resource id="id6" />
               <resource id="id7" />
               <resource id="id8" />
               <resource id="id9" />
               <resource id="id10" />
               <resource id="id19" />
               <resource id="id20" />
       </group>
 </group>
```

Once the grouping information is obtained it is normalised as now described in order to reduce the search space for the hotkey assignment problem

The normalisation algorithm comprises stepping through all the subgroups of a group and finding any resources that are shared among all subgroups. These are then placed at the top level group and removed from the subgroups. This can also be expressed as promoting any resource to a parent group if it is common to all subgroups; and if a resource already exists in a parent group, delete it from a subgroup.

This is one example of a suitable normalisation algorithm. However, any suitable normalisation algorithm can be used in order to reduce the search space through the groupings for the hotkey problem. For example, common subnode elimination or factorisation.

The results of applying the example normalisation process to the XML representation of the menu grouping is now given:

```
 <group id="menu1">
               <resource id="id1" />
               <resource id="id2" />
               <resource id="id3" />
               <resource id="id4" />
               <resource id="id5" />
               <resource id="id6" />
               <resource id="id7" />
               <resource id="id8" />
               <resource id="id9" />
               <resource id="id10" />
               <group id="statel ">
               <resource id="id11" />
               <resource id="id12" />
               <resource id="id19" />
        </group>
        <group id="state2">
               <resource id="id12" />
               <resource id="id1 3" />
               <resource id="id14" />
               <resource id="id15" />
        </group>
        <group id="state3">
               <resource id="id16" />
               <resource id="id1 7" />
               <resource id="id18" />
        </group>
        <group id="state4">
               <resource id="id19" />
               <resource id="id20" />
       </group>
 </group>
```

It can be seen that the 10 resources common to all states have been entered at the top level group and deleted from the subgroups. This is an example of one normalised resource-grouping. There would be many such resource-groupings for a typical user interface. The normalisation process can be carried out by any suitable processor such as a personal computer or the like and may or may not be integral with the hotkey fixer.

The results of the normalisation process enable us to quickly identify those resources that are used in every state and those which are used only in particular sub states (i.e. those resources in subgroups). This enables us to reduce the search space for possible hotkey combinations.

For example, in a preferred embodiment we analyse resources in the order of their group/subgroup level in the normalised group information structure. Thus the more levels in the hierarchy of the normalised group structure the greater the search space is reduced. For example, the resources that are used in every state are analysed and fixed first. This is beneficial as often, there are more hotkeys required then there are characters available in the strings or in the language. This way, the most frequently used resources are given the highest priority in assigning hotkeys.

In another embodiment we allow subgroup resources to use the same hotkeys, preferably as long as they don't appear together in the user interface. For example subgroup resources 16 and 19 in the above example, could, if necessary, use the same hotkey because these are only presented in different menu states and not together.

In another embodiment, we allow each subgroup to have a parent resource in the parent group nominated such that the resources in the subgroup can have duplicate hotkeys against the parent resource but not against any other resources in the parent group. For example, this provides for the radio button scenario as mentioned above and similar situations.

Another advantage of the normalisation process is that it enables us to reduce computing time for the hotkey detection and resolution process. This is because resources are considered at their highest group level rather than at each subgroup to which they apply.

Once the hotkey fixer 1 5 receives the input information as illustrated in FIG. 2 it carries out an automated process to detect and resolve hotkey classes (duplications).

### Calculating cost of use factor

The cost of use factors are identified on the basis of one or more prespecified criteria or rules. For example, these comprise one or more of:
- Does the hotkey have a duplicate in a parent resource group?
- Does the hotkey have a duplicate in a foreign control?
- Does the hotkey have a duplicate anywhere in its overall grouping?
- Does the hotkey use a preferred or just an allowed hotkey?
- If this resource is used in another grouping, is it clashing in the other grouping?

In a preferred embodiment, one or more of those factors are preferably combined using weightings to form a cost of use factor for particular hotkeys. This is explained in more detail below.

### Improving the cost of use factor

At a high level, once a less than perfect cost of use factor is identified an attempt is first made to fix or resolve this using single hotkey changes only. That is, by making hotkey changes in a single resource. This is done for each resource-grouping. If single hotkey changes do not yield a perfect hotkey configuration for the grouping then double hotkey changes are made. Double hotkey changes involve changing a hotkey in each of two resources.

Rather than detecting all hotkey clashes first and then proceeding with resolving those, we prefer in one embodiment, to identify at least one clash and proceed immediately with resolving it, before identifying all existing clashes. This has the advantage that resources are not wasted in finding all hotkey clashes which may later be resolved or added to when a first hotkey clash is resolved.

As mentioned above, we analyse resources in order depending on their group/subgroup level in the normalised resource-grouping.

In a preferred embodiment we calculate a cost of change factor for each resource which captures the group/subgroup ordering and adds other information. The cost of change factor is then used to determine an order for analysing the resources. However, it is not essential to determine a cost of change factor. The order information can simply be taken from the normalised resource-grouping. By ordering the resources in this way we effectively reduce the search space because usually, a solution is formed before all the resources and hotkey combinations need to be considered. That is, we decide not to consider combinations where the cost of changing a hotkey is high unless other combinations fail.

### Cost of change

In a preferred embodiment the Cost of Change is a value that can be associated to every resource, and it indicates the implications of changing the hotkey value for that specific resource. For example, the lower the value of the Cost of Change factor, the less implications there are to change the hotkey used by this resource, and therefore the more preferred it is.

Examples of factors that determine the *Cost of Change* factor comprise one or more of:
- Is the resource used in multiple groupings?
- Is the resource a legacy-resource (i.e. recycled from the previous version of the software, and not changed since)?
- Is this resource locked (i.e. not allowed to change)?
- Is this resource dependent on another master-resource (i.e. it needs to assume the same value as the master-resource)?
- Is this resource a master-resource (i.e. it has other resources depending on it)?

All these factors (with possibly different weights) make the resource less attractive to change.

### Single resource hotkey changes

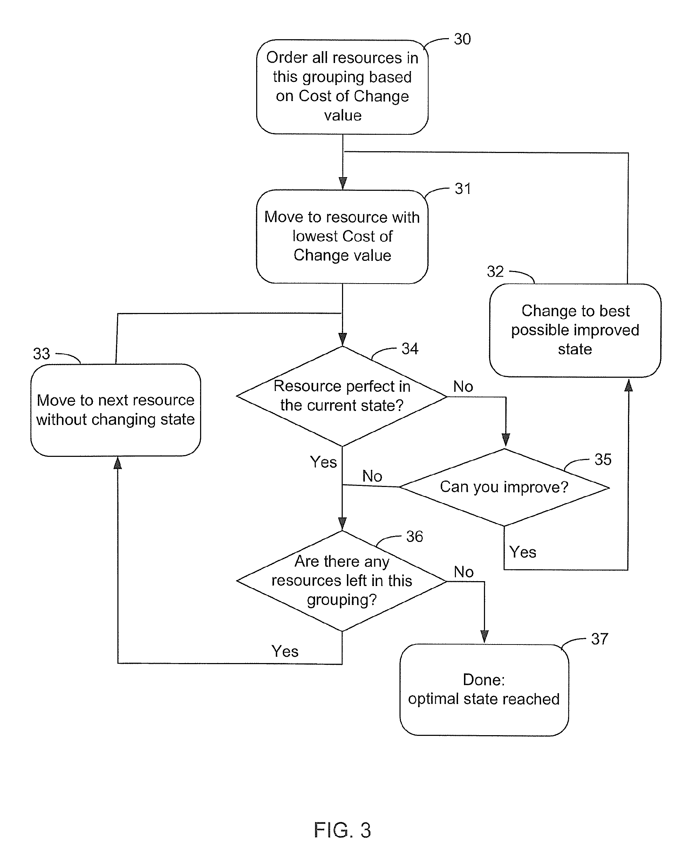

An example method for detecting and resolving hotkey clashes using single resource changes is now described with reference to FIG. 3. This method is carried out on a single resource grouping and it is repeated for each resource-grouping in the user interface.

The resources are first ordered on the basis of a cost of change factor which is determined as described above (see box 30 of FIG. 3). The resource which has the lowest cost of change factor is selected (see box 31) and an assessment is made as to whether any hotkey changes should be made for this resource (see box 34 of FIG. 3). This assessment is made by calculating a cost of use factor for the selected resource.

In a preferred embodiment the cost of use factor is determined on the basis of the following factors which are expressed numerically, weighted and combined to produce a numerical value:
- Duplicates with hotkeys from resources in a parent resource group
- Duplicates with hotkeys from foreign controls
- Duplicates with hotkeys from any resource in the grouping
- Preferred/allowed states of the hotkey
- Duplicates with hotkey from other groupings if this resource is used in those groupings.

However, it is not essential to use all these factors; one or more of these can be used to influence the cost of use factor. Alternatively, or in addition, any other suitable factors which relate to hotkey duplications and usage of a specific value of a hotkey can be used.

If the cost of use factor for the selected resource is a less than perfect value then an attempt is made to improve (see box 35 of FIG. 3).

In the case of standard resources\hotkeys [in which case the hotkey- character has to be part of the translation], this is done by iterating through all the remaining characters in the resource and calculating the Cost of use Factor in each case as if that character was used. In the case of resources\hotkeys where the hotkey used does not need to be part of the original string, this is done by analysing the entire grouping to decide which character would result in the lowest Cost of use Factor for that resource.

If no lower Cost of use Factor is found for any of the available characters the next resource in the grouping is selected based on Cost of Change factor (see boxes 33 and 36 of FIG. 3).

If a lower Cost of use Factor is found (which indicates a better state: usually no clash), the character that gives the lowest Cost of use Factor for this resource is used (see box 32 of FIG. 3). The grouping is now considered to be in a different state.

As soon as a change is made to any of the resources based on a lower Cost of use Factor (in other words, changes state), the process starts again, with the resource with the lowest Cost of Change factor. However, this time the analysis is performed on the grouping based on the changed state.

Once the end of the list of resources is reached without being able to improve on the Cost of use Factor of a single resource (in other words, without changing state anymore), the optimal state by making single-hotkey changes is reached (see box 37 of FIG. 3).

When the optimal state is reached using this single-resource change algorithm, often a workable result is obtained.

In the case the grouping is still in a less then optimal state, a limited attempt is made to improve on the state of the grouping by a restricted double-resource change algorithm.

### Double resource change algorithm

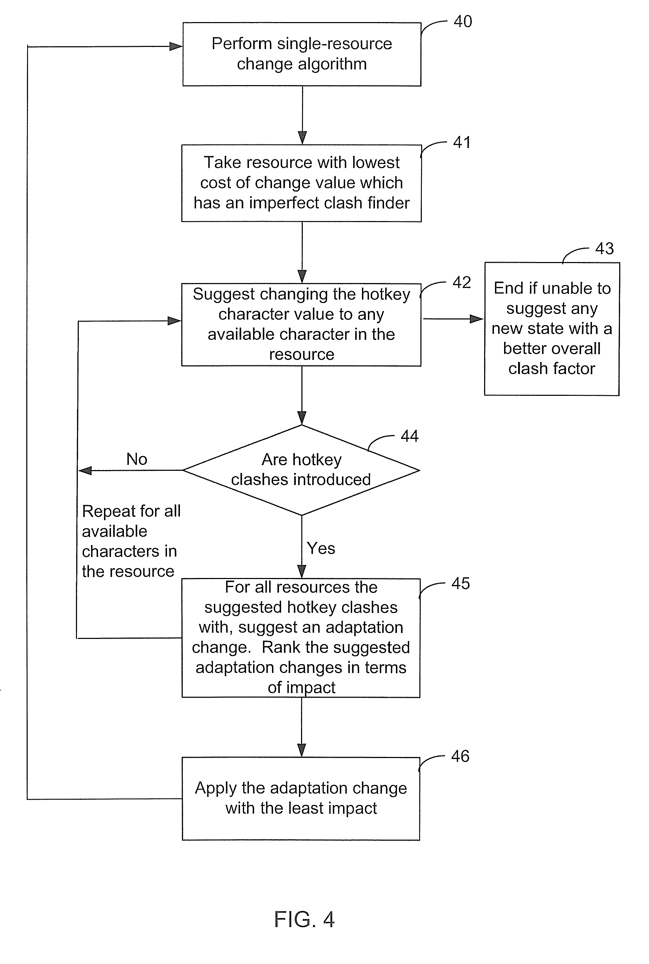

The resource with the lowest *Cost of Change* factor that has not a perfect *Cost of use Factor (see box 41 of FIG.* 4) is selected. For this resource:

The system suggests changing the state (changing the hotkey character value) for this resource, to any of the available characters within this resource (see box 41 of FIG. 4).

The impact of this suggested state on the grouping is analysed. Does it introduce hotkey-clashes? (see box 44 of FIG. 4) (It will - as the state of the resource was not perfect and if there had been a perfect alternative, it would have been found by now). If so, for all the resources this new state clashes with, suggested an adaptation change for this second resource, in order to avoid this new clash, and rank these in order of impact (see box 45 of FIG. 4). In other words, if the change to the first resource were to take place, what is the best way to avoid any new clashes?

Once system has run through all the possible states of the first resource, take the adaptation change found that has the least impact, and apply this change (see box 46 of FIG. 4).

Now, in this enforced changed state (with one resource changed), run the grouping through the entire Single Resource Change algorithm again. It is expected that, with the second resource already being adapted to the upcoming change in the first resource, the Single Resource Change algorithm will actually make that change, and with the changed state of the entire grouping, it is often able to come up with more changes and therefore a better overall state.

This double resource change process is repeated, every time the Single Resource Change algorithm runs to completion. However, at some point, Hotkey Fixer will not be able to suggest any new state with a better overall *Cost of use Factor,* not even with two resources changing. At that point, it considers the clashes unfixable within the time it has, and the attempts will be abandoned (see box 43 of FIG. 4).

An example of the double resource change algorithm is now given:

Consider a resource grouping as follows:
File
...
...
Open
...
...
Format
...

Examine the strings File and Open in isolation.
- File has a hotkey clash with Format, but assume all its other characters have already been used by other resources, it can't improve on it's state by a single change.
- Assume that Open has no clash with any other resource. A single resource change will therefore never change the hotkey character as it has no immediate improvement.
- Open does contain (and uses) a character that File could use, 'e'. Assume that the character 'n' is not being used in any of the other resources, the hotkey fixer will suggest using 'n' for Open.
- In this example, the resource grouping is now in the following state:
   File
   ...
   Open
   ...
   Format
   ...
The Single Resource Algorithm will, when subsequently being run, find that in this changed state, the character 'e' has become available for resource File.
This represents a better state already, that would never have been reached with changing single resources. And, it often results in even better results for the overall grouping now the state is slightly altered and different fixes may suddenly be possible.
Additionally, the double resource algorithm may be called again to further change the hotkeys being used. In another embodiment, the double resource algorithm could forcibly introduce a duplicate clash to see if subsequent single and double resource changes can improve the overall state.

In some embodiments subgroup resources have a lower cost-of-change than higher level group resources. In that case, normalisation of the grouping data ensures that, if any hotkey clashes remain in the grouping, they occur in the lowest subgroup possible.

In some examples, resources between subgroups of a master group are allowed to use the same hotkey as these resources are never presented together at runtime.

The term "cost of use" is used to refer to any non-preferred configuration of hotkeys such as duplications, use of non-preferred characters and use of characters not present in a resource.

### Use of keyboard mapping to assign hotkeys

In another example it is possible to use a mapping between a source language keyboard character set and a target language keyboard character set to localize hotkeys. The mapping specifies for each key on the source keyboard, the equivalent key on the target keyboard. For example, if the source keyboard is provided in American English and the target keyboard in Hindi, then the source key "A" maps to the target key "X" where X is the appropriate Hindi character. The mapping can be used to localize hotkeys in situations where a source language resource set with appropriately assigned hotkeys exists. "Dummy" hotkeys are used, that is, hotkeys which are provided using characters added to the resource labels rather than being existing members of the resource labels. These dummy hotkeys can be added to the resource labels in any suitable position in the resource labels provided that some indication is made to enable a user to identify them as hotkeys. For example, the dummy hotkeys can be shown in parentheses or immediately following a particular character such as "&".

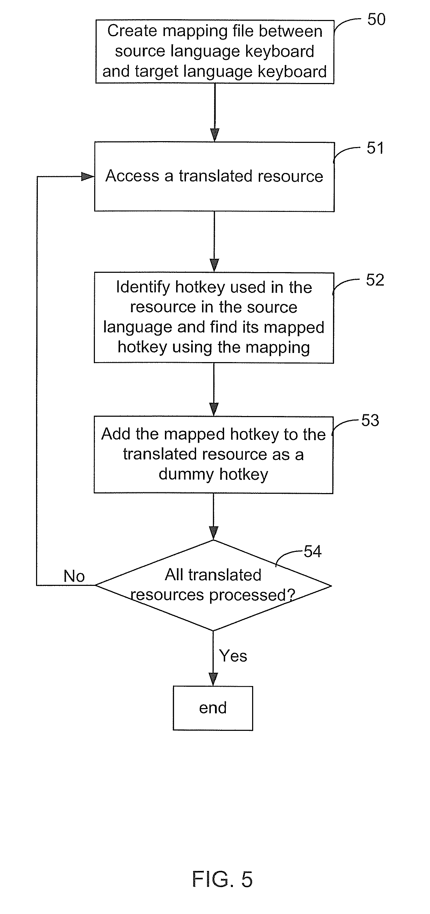

A method of assigning hotkeys using a keyboard mapping is now described with reference to FIG. 5. The keyboard mapping is created or accessed (see box 50) for example, in the form of a file or other suitable data structure. A translated resource is accessed (see box 51) being a resource from a source language translated into a target language. A hotkey (which may be a sequence of characters or a single character as mentioned above) is identified in the source language resource and its mapped hotkey character is found from the mapping data (see box 52). The mapped hotkey is added to the translated resource as a dummy hotkey (see box 53) in any suitable manner, for example, by concatenation, making a pre-fix, or insertion. Alternatively the mapped hotkey is presented adjacent to the translated resource or in a separate window or in any other suitable manner. This method is then repeated (see box 54) until all the translated resources have had mapped hotkeys assigned.

Many of the examples mentioned herein refer to the use of single characters for hotkeys. However, it is also possible to use sequences of characters including accelerators such as "Ctrl P" and the methods and apparatus described herein are applicable to these types of hotkeys. In the case that a plurality of characters are used for a single hotkey, these hotkeys can be presented outside a displayed string or label rather than being integral with that string or label. Our algorithms seek to use as short a sequence of characters as possible for hotkeys in the case that a plurality of characters can be used for hotkeys. For example, "FF" is preferred over "FFF". When calculating whether hotkeys are duplicate in the case that a plurality of characters are used for single hotkeys, then a suitable rule is specified. For example, a hotkey is duplicate if the complete sequence is duplicate against another sequence or the start of another sequence. For example, "F" is then duplicate against "FF". Also, "F" and "FG" are then duplicate against "FGE". However, "FF" is not then duplicate against "FG" or "FGE". In the case that a plurality of characters can be used for hotkeys then it is not essential for the hotkey characters to be taken from the available characters in the labels or strings. Instead, the hotkey characters are taken from a list of available hotkeys comprising details of the keys available on the keyboard of the target language for example.

In the case that accelerators are to be assigned the methods are arranged to always assign one of a specified sequence of keys prior to another character or sequence of characters. For example, "Ctrl", "Ctrl Shift" and "Ctrl Alt" are possible specified sequences of keys which are to occur before a another character or characters to together form a hotkey.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

Although the present examples are described and illustrated herein as being implemented in a hotkey resolution system, the system described is provided as an example and not a limitation. As those skilled in the art will appreciate, the present examples are suitable for application in a variety of different types of systems where characters need to be assigned to resources such that specified criteria such as consistency and uniqueness are met.

It will be understood that the above description of a preferred embodiment is given by way of example only and that various modifications may be made by those skilled in the art.

## Claims

1. A method of assigning hotkeys within a resource grouping the method comprising:
(i) receiving normalised grouping information for the resource grouping;
(ii) ranking the resources in the grouping on the basis of a cost of change factor associated with each resource, the cost of change factor being related to at least the normalised grouping information;
(ii) accessing state information comprising a hotkey value for each resource group;
(iii) selecting a resource on the basis of its rank;
(v) determining a cost of use factor for the hotkey of the selected resource;
(vi) attempting to improve the determined cost of use factor by making a change to the hotkey in the selected resource and if the attempt is successful effecting the hotkey change such that the state information is changed; if the change is not successful, selecting the next resource from the ranked resources until all resources have been processed.

2. A method as claimed in claim 1 wherein the normalised grouping information comprises an indication as to whether each resource is a member of the group as a whole or to one of a plurality of subgroups.

3. A method as claimed in claim 2 wherein resources within subgroups have a lower cost of change factor than resources within groups.

4. A method as claimed in any preceding claim which further comprises receiving information about resources comprising any one or more of: resources which are used in other resource groupings, resources which are legacy-resources, resources which are locked, resources which must assume the same hotkey value as a master-resource, and resources which are master-resources.

5. A method as claimed in claim 4 which further comprises using any one or more of the items of information about resources to influence a cost of change factor for each resource.

6. A method as claimed in any preceding claim wherein the step of accessing the state information comprises assigning a hotkey for one or more resources which have no hotkey already, the assignment being made by selecting a character from the resource or from a set of available characters.

7. A method as claimed in any preceding claim wherein the cost of use factor is related to one or more of: duplicates with hotkeys of other resources; duplicates with hotkeys from resources in higher level groups of the normalised grouping; duplicates with hotkeys from foreign controls; duplicates with hotkeys of any resources in the grouping; whether the hotkey is preferred or allowed; presence of hotkey duplicates in other resource groupings of which the resource concerned is a member.

8. A method as claimed in any preceding claim wherein the attempt to improve the determined cost of use factor comprises changing the hotkey to another character in the selected resource.

9. A method as claimed in any preceding claim which further comprises, after said step (iv) in which all the resources are processed, carrying out an attempt to improve the state by making a change to a hotkey in two resources.

10. A method as claimed in claim 9 wherein a change to a hotkey in one of the two resources is made by:
• selecting a first resource that has a hotkey clash with at least one other resource; and calculating possible hotkey values the first resource can assume;
• selecting a second resource that currently uses a hotkey value that the first resource could use;
• changing the hotkey value of the second resource to another hotkey value; and
• setting the hotkey value of the first resource to the hotkey value the second resource had before the change.

11. A method as claimed in claim 10 wherein a change to a hotkey in the other of the two resources is made by repeating the hotkey change process of claim 1.

12. An apparatus (1 5) for assigning hotkeys within a resource grouping the apparatus comprising:
(i) an input arranged to receive normalised grouping information (22) for the resource grouping;
(ii) ranking means (26) arranged to rank the resources in the grouping on the basis of a cost of change factor associated with each resource, the cost of change factor being related to at least the normalised grouping information;
(ii) an input arranged to access state information comprising a hotkey value for each resource group (23);
(iii) a selector (23) arranged to select a resource on the basis of its rank;
(v) a processor (23) arranged to determine a cost of use factor for the hotkey of the selected resource;
(vi) the processor (23) being arranged to attempt to improve the determined cost of use factor by making a change to the hotkey in the selected resource and if the attempt is successful effecting the hotkey change such that the state information is changed; if the change is not successful, selecting the next resource from the ranked resources until all resources have been processed.

13. An apparatus as claimed in claim which 12 further comprises an input arranged to receive information about resources (27) comprising any one or more of: resources which are used in other resource groupings, resources which are legacy-resources, resources which are locked, resources which must assume the same hotkey value as a master-resource, and resources which are master-resources.

14. An apparatus as claimed in claim 13 wherein the processor (26) is arranged to use any one or more of the items of information about resources to influence a cost of change factor for each resource.

15. An apparatus as claimed in any of claims 12 to 14 wherein the input arranged to access the state information comprises a processor arranged to assign a hotkey for one or more resources which have no hotkey already, the assignment being made by selecting a character from the resource or from a set of available characters.

16. An apparatus as claimed in any of claims 12 to 1 5 wherein the processor is arranged such that after all the resources are processed, an attempt is made to improve the state by making a change to a hotkey in two resources.

17. An apparatus as claimed in claim 16 wherein the processor is arranged to make a change to a hotkey in one of the two resources is by:
• selecting a first resource that has a hotkey clash with at least one other resource;
• calculating possible hotkey values the first resource can assume;
• selecting a second resource that currently uses a hotkey value that the first resource could use;
• changing the hotkey value of the second resource to another hotkey value; and
• setting the hotkey value of the first resource to the hotkey value the second resource had before the change.

18. A method of assigning a hotkey to a resource comprising:
(i) accessing a mapping between a source language keyboard character set and a target language keyboard character set;
(ii) identifying one or more hotkey characters of a source language resource and determining one or more corresponding mapped characters using the accessed mapping;
(iii) accessing a translation of the source language resource that translation being in a target language;
(iv) adding the one or more mapped characters to the target language resource.

19. A computer program comprising computer program code means adapted to perform all the steps of any of claims 1 to 11 when said program is run on a computer.

20. A computer program as claimed in claim 19 embodied on a computer readable medium.
